# EUROPÄISCHE PATENTSCHRIFT

(11) **EP 0 704 712 B1**
(45) Veröffentlichungstag und Bekanntmachung des Hinweises auf die Patenterteilung: **16.07.2003**
(21) Anmeldenummer: 95115211.5
(22) Anmeldetag: 27.09.1995
(51) Int. Cl.: G01S 5/00, B60R 25/10

(54) **Verfahren und System, um eine Meldung von einem Meldeorgan in einem Transportmittel zur Zentrale zu senden**
Method and system for transmitting information from a sensor in a transport means to a central station
Procédé et système pour transmettre une information d'un capteur dans un moyen transporteur à une centrale

(30) Priorität: 27.09.1994 DE 4434470
(43) Veröffentlichungstag der Anmeldung: 03.04.1996
(73) Patentinhaber: Fehst, Cornelius, 63450 Hanau (DE)
(72) Erfinder: Hüschelrath, Gerhard, Dr., D-63846 Laufach-Frohnhofen (DE); Fehst, Cornelius, D-63450 Hanau (DE)
(74) Vertreter: Zounek, Nikolai, Dipl.-Ing.

(56) Entgegenhaltungen:
- EP-A- 0 242 099
- WO-A-90/04291
- WO-A-90/13183
- WO-A-93/05490
- WO-A-93/16452
- WO-A-94/13515
- WO-A-94/26567
- DE-A- 4 403 873
- DE-U- 9 406 605
- US-A- 5 223 844

## Beschreibung

Die Erfindung bezieht sich auf ein Verfahren zur Erzeugung einer zentralen Meldung bei Betätigung eines Meldeorgans in einem Transportmittel und auf ein System zur Durchführung des Verfahrens gemäß der Oberbegriffe der Ansprüche 1 und 4.

Es sind Alarmanlagen für Kraftfahrzeuge bekannt, die nach dem Aufbrechen des jeweiligen Kraftfahrzeugs eine akustische Meldung erzeugen, die die Aufmerksamkeit von Personen, die sich in der Nähe bzw. Umgebung des Kraftfahrzeugs befinden, auf das Fahrzeug lenken soll. Eine derartige bekannte Alarmanlage reagiert auf jeden im Fahrzeug eingeschalteten Verbraucher nach einer Verzögerungszeit, in der die Alarmanlage entschärft werden muß, um die Auslösung des Alarms zu verhindern. Mit dieser Alarmanlage werden die Zündung, das Radio und alle zu eine Zentralverriegelungsanlage gehörenden Türschlösser bzw. der Kofferraumverschluß gesichert. Ein von der Alarmanlage erzeugter Alarm bleibt allerdings wirkungslos, wenn er von Personen nicht gehört oder nicht beachtet wird. Bei manchen Alarmanlagen kommt es zu Fehlalarm, z.B. wegen zu späten Unscharfschalten. Solche Fehlalarme sind einer von mehreren Gründen, warum die akustischen Meldungen der Alarmanlagen vielfach nicht beachtet werden.

Der DE 44 03 873 A1 ist ein Verfahren zu entnehmen, um Gegenstände vor Entwendung sowie das Wiederauffinden von beweglichen Gegenständen bei Verlust zu ermöglichen. Hierzu wird ein zu schützender bzw. wiederaufzufindender Gegenstand mittels eines installierten Senders oder Ortungsgerätes bei unfreiwilliger örtlicher Veränderung des Gegenstands geortet, um ein Wiederauffinden zu erleichtern.

Die DE 42 43 415 C1 bezieht sich auf ein Alarmsystem für bewegliche Güter, mit dem ebenfalls erst nach Aktivierung des Alarmsystems die das Fahrzeug kennzeichnenden Imformationen ausgesendet werden.

Im Fall eines Alarms werden nach der DE 42 03 865 A1 von einem Funksender Signale abgesandt, die die augenblickliche oder zuletzt bestimmte Position des Fahrzeuges beinhalten.

Fahrzeugspezifische und gegebenenfalls Standortinformationen werden bei einer Alarmvorrichtung gemäß der DE 39 26 983 A1 in einem Fahrzeug gespeichert und dann ausgesendet, wenn ein Alarmfall auftritt.

Bei einem Kommunikationssystem für Fahrzeuge werden nach der DE 38 05 810 A1 fahrzeugspezifische Daten und Codes zur Fahrzeugidentifizierung in einer Speichereinrichtung gespeichert. Die abgelegten Daten können über ein Funkgerät dann automatisch ausgesendet werden, wenn eine Auslöseeinrichtung aktiviert ist, die zweckmäßigerweise mit einer Diebstahlalarmanlage gekoppelt ist.

Aus der DE 40 32 198 A1 ist eine Transportüberwachung bekannt, mit der ein mobiler Teilnehmer fortwährend überwacht werden soll, wobei eine Funk-, Sende-Einrichtung stets betriebsbereit zu halten ist, um automatisch oder auf periodische Anforderungen hin erforderliche Informationen zur Verfügung zu stellen. Die Überwachung erfolgt dabei nur während der Fahrt, da sich der mobile Teilnehmer zu Beginn der Fahrt anmelden und nach der Beendigung abmelden soll. Zusätzlich kann der mobile Teilnehmer über einen Crash-Sensor verfügen, der im Falle eines Unfalles zusätzlich eine Meldung über die Fahrzeug-Funksende-Einrichtung an die Überwachungszentrale automatisch absetzt, so daß die Rettungsorganisationen sofort eingreifen können.

In der DE 39 32 029 A1 wird eine Anlage zur Positionserkennung von Fahrzeugen innerhalb eines Überwachungsgebietes beschrieben.

Die US 5,223,844 bezieht sich auf ein Fahrzeug-Überwachungssystem, bei dem im Falle eines Alarms die Position des Fahrzeuges und andere spezifische Daten erfaßt werden. Dabei kann der ein Ereignis wie Notfall signalisierende und an eine Überwachungsstelle abgesandte Befehl bestätigt und in dem Fahrzeug angezeigt werden.

Beim Auslösen eines Alarms in einem Fahrzeug wird nach der WO 93/16452 die Position zusammen mit dem Alarmsignal übermittelt.

Nach der EP 0 242 099 A2 wird die Position eines Fahrzeuges dann an eine Überwachungsstelle übermittelt, wenn eine ungewollte Veränderung am Fahrzeug erfolgt.

Nach der Literaturstelle OmniTRACS Driver Manual, May 1990, TM80-2448, erfolgt eine fortwährende Überwachung eines Fahrzeuges. Weitere sich auf das Überwachungssystem beziehende Veröffentlichungen (criminal digest Nr. 5/90, Funkschau Nr. 22/91 oder Unixwelt Nr. 3/92) verdeutlichen, dass das System für ein Flottenmanagement bestimmt ist, ohne dass Überwachungsfunktionen eines parkenden Kranfahrzeuges in dem Vordergrund stehen. Auch können Nachrichtenübertragungen quittiert werden (Funkschau Nr. 22/91).

Aus der Literaturstelle "Logistics today" ist es bekannt, den Weg eines bewegten Fahrzeuges zu überwachen.

Der Erfindung liegt das Problem zugrunde, ein Verfahren und ein System zur Durchführung des Verfahrens gemäß der Oberbegriffe der Ansprüche 1 und 7 so weiterzubilden, daß bei Auslösung eines durch Störung am oder im Transportmittel bedingten Signals ein schnelles Reagieren von der Überwachungsstelle her erfolgen kann, wobei stets sichergestellt werden soll, daß bei Auslösung des Signals die Position des Transportmittels bekannt ist.

Das Problem wird verfahrensmäßig durch die Maßnahmen des Anspruchs 1 gelöst.

Abweichend vom vorbekannten Verfahren wird zunächst die Position des Transportmittels insbesondere Fahrzeugs, das auch ein Wasserfahrzeug einschließt, an eine zentrale Überwachungsstelle abgesandt. Die Überwachungsstelle ist mit Personal besetzt, das nach dem Empfang einer solchen Nachricht, die die Transportmittelposition, den Transportmitteltyp und weitere Daten angibt, diese erfaßt. Für den Fall einer Störung bzw. Bedrohung werden sodann zu deren Beseitigung Maßnahmen eingeleitet, wenn charakteristische Signale empfangen werden. Da die Position des Transportmittels bereits vorbekannt ist, ist ein schnelles Reagieren möglich.

Die für das Meldeorgan typischen Daten werden in Abhängigkeit von der Art des Meldeorgans mit einem entsprechenden Befehl ausgewertet. Falls das Meldeorgan eine von Hand betätigbare Einrichtung ist, kann die Auswertung anders sein als bei einem als Sensor für eine physikalische Größe ausgebildeten Meldeorgan. Wenn das Meldeorgan für die Feststellung einer unerlaubten Manipulation am Transportmittel eingerichtet ist, können die Maßnahmen in der Alarmierung eines der Transportmittelposition am nächsten liegenden Wachdienstes oder eine Polizeidienststelle, die der Transportmittelposition geographisch am nächsten liegt, bestehen. Die für das Meldeorgan typischen Daten beziehen sich bei einem Fahrzeug insbesondere darauf, ob eine Bedrohung der Insassen vorliegt oder ob eine Entwendung des Fahrzeugs oder eines Fahrzeugteils stattfindet.

Erfindungsgemäß wird nach dem Anhalten des Fahrzeugs der Befehl zur Einstellung eines Überwachungsstatus zusammen mit der Rufnummer, der geographischen Fahrzeugposition und den fahrzeugspezifischen Daten an die Überwachungsstelle gesendet, die den Empfang des Befehls durch Aussenden einer drahtlosen, für den Empfang im Kraftfahrzeug bestimmten Statusrückmeldung quittiert, die im Kraftfahrzeug angezeigt wird. Der Fahrer erhält hierbei nach dem Aussenden eines Überwachungsauftrages für das Fahrzeug eine Bestätigung des Sicherheitsauftrags. Falls er nach dem Aussenden eines Überwachungsauftrages an die zentrale Überwachungsstelle keine Rückmeldung erhält, kann er die Park- bzw. Liegeposition des Fahrzeugs verändern, bis eine Funkverbindung mit der zentralen Überwachungsstelle hergestellt ist. Die Rückmeldung ist für den Fahrer bzw. die Bedienungsperson, die den Befehl aussendet, ein Beleg dafür, daß der Überwachungsauftrag in der zentralen Überwachungsstelle empfangen und angenommen worden ist. In der Überwachungsstelle kann der Überwachungsauftrag quittiert bzw. belegt werden. Gegenüber einem Versicherungsunternehmen kann dann im Falle einer Inanspruchnahme von Leistungen aufgrund eines Diebstahls oder aufgrund von Zerstörungen am oder im Fahrzeug die Überwachung durch den Sicherheitsdienst belegt werden. Der Überwachungsstatus in der Überwachungsstelle wird mit einem vom Fahrzeug aus gesendeten speziellen Befehl aufgehoben.

Vorzugsweise werden nach der Einstellung des Überwachungszustandes in der Überwachungsstelle bei Änderung der geographischen Fahrzeugposition entsprechende Daten zur Überwachungsstelle übertragen, die bei Abweichung der Fahrzeugposition von der bei Beginn der Überwachung vorhandenen Fahrzeugposition einen Alarm erzeugt. Das Überwachungspersonal in der zentralen Station kann auf einen derartigen Alarm hin sofort Maßnahmen zur Verhinderung der Entwendung oder der Wiedererlangung des entwendeten Fahrzeugs einleiten. Von der zentralen Überwachungsstelle aus kann drahtlos oder drahtgebunden ein Sicherheitsdienst, der sich in der geringsten Entfernung vom Fahrzeugort befindet, zu diesem Ort geleitet werden. Auch die Alarmierung der dem Fahrzeugort am nächsten liegenden Polizeidienststelle ist möglich.

Es kann aber auch die in der zentralen Überwachungsstelle empfangene Meldung über die Veränderung der Fahrzeugposition eines überwachten Fahrzeugs in einer Datenverarbeitungsanlage ausgewertet und automatisch an die der Fahrzeugposition nächstgelegene Wachdienst- oder Polizeidienststelle übermittelt werden.

Im Überwachungszustand wird nach der Feststellung einer Manipulation am Fahrzeug insbesondere die geographische Fahrzeugposition fortlaufend der zentralen Überwachungsstelle gemeldet. In der Überwachungsstelle ist daher die die Fahrzeugsposition nach der Entwendung des Fahrzeugs ständig bekannt, so daß gezielt Maßnahmen zur Wiedererlangung des Fahrzeugs gesteuert werden können.

Bei einer anderen zweckmäßigen Ausführungsform wird bei einer im Fahrzeug angeordneten Alarmanlage durch das Scharfschalten der Alarmanlage an die zentrale Überwachungsstelle selbsttätig ein Befehl zur Überwachung bzw. Beobachtung wenigstens eines Meldeorgans der Alarmanlage zusammen mit der Rufnummer der Überwachungsstelle, der geographischen Fahrzeugposition und fahrzeugspezifischen Daten übertragen, wobei der Befehl die Überwachungsstelle in einen Beobachtungszustand für das Fahrzeug versetzt, in dem der Empfang von Meldungen über das Ansprechen eines oder mehrere Meldeorgane der Alarmanlage in der Überwachungsstelle einen Alarm auslöst und wobei beim Unscharfschalten der Alarmanlage der Beobachtungszustand durch eine entsprechende, an die Überwachungsstelle ausgesendete Meldung zurückgenommen wird. Bei dieser Ausführungsform spricht die Alarmanlage des Fahrzeugs an, wenn in geschärftem Zustand Manipulationen am Fahrzeug vorgenommen werden. Zugleich wird die zentrale Überwachungsstelle alarmiert, von der aus durch das Überwachungspersonal Maßnahmen zur Verhinderung des Diebstahls oder zur Wiedererlangung des gestohlenen Fahrzeugs eingeleitet werden.

Ein System zur Durchführung der oben beschriebenen Verfahren umfasst erfindungsgemäß die kennzeichnenden Merkmale des Anspruchs 4. Es kann ein Bordrechner der Type BC 100 eingesetzt werden.

Die vorstehend beschriebenen Bauelemente werden vorzugsweise verdeckt im Fahrzeug angeordnet.

Die oben beschriebenen Maßnahmen eignen sich insbesondere für Kraftfahrzeuge und Kraftfahrzeuganhänger, z.B. Wohnwagen. Es können aber auch Schienenfahrzeuge, Boote und andere Transportmittel wie Container überwacht werden. Vorteilhafte Ausgestaltungen des oben beschriebenen Systems sind in den Ansprüchen 5 bis 8 angegeben.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der folgenden Beschreibung eines in einer Zeichnung dargestellten Ausführungsbeispiels.

Es zeigen:
- Fig. 1: ein System zur Erzeugung einer zentralen Meldung bei Betätigung eines Meldeorgans in einem Fahrzeug oder Transportmittel im Schema,
- Fig. 2: eine in einem Fahrzeug angeordnete Einrichtung zur Erzeugung geographischer Fahrzeugpositionsdaten und zur Erfassung der Zustandsänderungen von Meldeorganen sowie zur Erzeugung von für eine zentrale Überwachungsstelle bestimmten Telegrammen im Blockschaltbild.

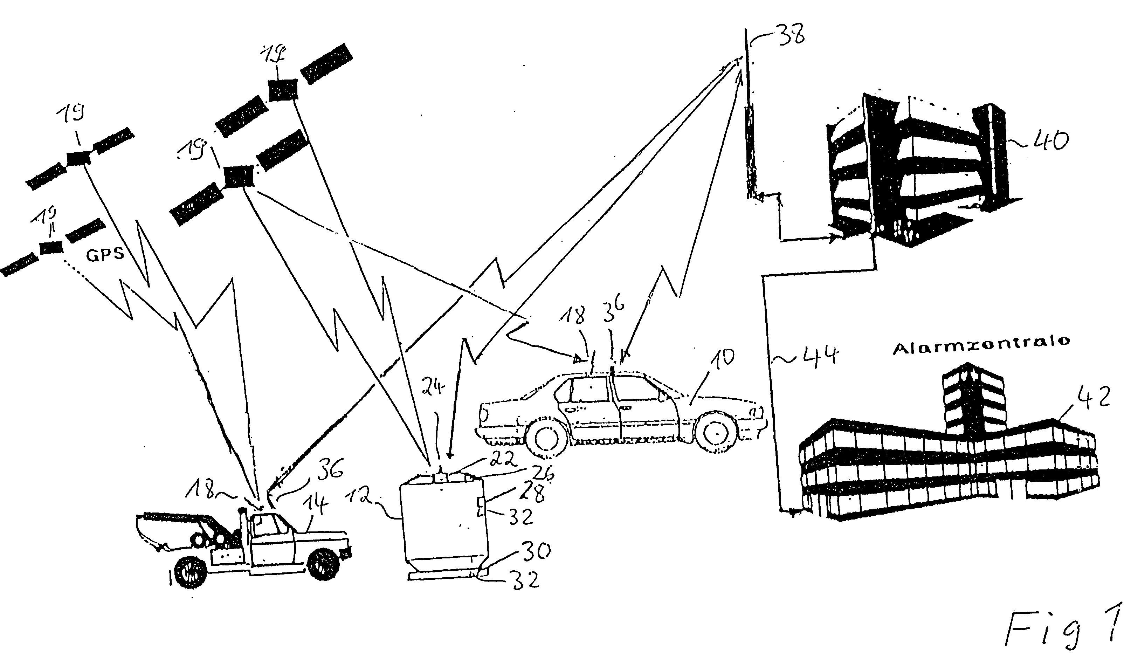

In Fig. 1 ist im Schema ein System zur Erzeugung einer zentralen Meldung bei Betätigung von wenigstens einem Meldeorgan in einem Ortsveränderlichen Objekt wie Transportmittel dargestellt. Transportmittel im System sind Personenkraftfahrzeuge (10), Container (12) und Lastkraftwagen (14). Die Fig. 1 zeigt jeweils nur eines dieser Transportmittel, von denen zahlreiche vorgesehen sein können. Zu dem System können auch noch andere, nicht dargestellte Transportmittel wie Schienenfahrzeuge oder Boote gehören, die nicht dargestellt sind. Die Lastkraftwagen (14) und Schienenfahrzeuge bzw. Boote sind unter anderem für den Transport der Container (12) bestimmt.

Die Personenkraftfahrzeuge (10), Lastkraftwagen (14) und gegebenenfalls Container (12) sind jeweils mit einem Satellitennavigations-Empfänger (16) ausgestattet, mit dem eine aktive oder passive Antenne (18) verbunden ist. Derartige Satellitennavigations-Empfänger mit wahlweise passiver oder aktiver Antenne sind an sich bekannt und werden abgekürzt als GPS (Global Positioning System) bezeichnet. Mit dem Satellitennavigations-Empfänger (16) wird im jeweiligen Transportmittel mit Hilfe von in Fig. 1 schematisch dargestellten Satelliten (19) die jeweilige geographische Position des Transportmittels bzw. Fahrzeugs bestimmt. Es kann aber auch ein Trägheitsnavigationssystem verwendet werden.

Der Satellitennavigations-Empfänger (16) im jeweiligen Transportmittel ist mit einem Bordrechner (20) verbunden, der z.B. ein unter der Type BC 100 kommerziell verfügbarer Bordrechner ist. An den Bordrechner (20), der wenigstens eine Eingabe-, Ausgabeschnittstelle für Meldeorgane aufweist, sind in den Transportmittel Meldeorgane angeschlossen, mit denen bestimmte Zustände in den ortsveränderlichen Objekten bzw. Transportmittel erfaßt werden. Meldeorgan im Sinne der Erfassung der Zustände eines Transportmittels ist auch der Satellitennavigations-Empfänger (16), der die geographische Lage des Transportmittels angibt. Es können aber auch andere Meldeorgane z.B. Sensoren für die Geometrie, die Temperatur, den Druck, das Gewicht, den Füllstand und dergleichen vorgesehen sein, mit denen ein Transportmittel bzw. das transportierte Gut überwacht wird. Als Sensoren können z.B. Druck-/Zug-Federn in Verbindung mit Stufenkontakten, Dehnungsmeßstreifen, Flüssigkeitsdefektoren, Druck- und Temperaturfühler vorgesehen sein.

Während die Satellitennavigations-Empfänger (16) insbesondere in fahrbahren Transportmitteln wie Kraftfahrzeugen angeordnet sind, befinden sich in oder an Behältern Kommunikationsgeräte (22), in die die geographische Position von außen, d.h. von einem Satellitennavigations-Empfänger eingegeben wird. Befindet sich ein mit einem derartigen Kommunikationsgerät (22) versehener Behälter oder Container (12) auf einem Lastkraftwagen (14), so speist dessen Satellitennavigations-Empfänger über den Bordrechner (20) während der Fahrt fortlaufend die jeweilige geographische Position in das Kommunikationsgerät (22) ein, das diese Position nach dem Trennen vom Satellitennavigations-Empfänger, z.B. beim Abladen gespeichert hält. Neben dem Kommunikationsgerät (22) mit der Antenne (24) ist im jeweiligen Container (12) auch eine separate Spannungsversorgung (26), z.B. eine Batterie, vorgesehen. Am oder im Container (12) sind darüberhinaus Meßeinrichtungen, die mit dem Kommunikationsgerät (22) verbunden sind, vorgesehen. Es handelt sich z.B. um einen Füllstandanzeiger (28) und um Wägezellen (30) im Grundrahmen oder an der Verriegelung oder an der Entleerklappe. Der Füllstandsanzeiger (28) und die Wägezelle (30) sind mit Auslösern für die Meldung verbunden. Am Container (12) können weitere Zusatzeinrichtungen wie Pager, Peilsender oder eine Löschvorrichtung vorhanden sein.

Die vorstehend erwähnten Bauteile sind geschützt und/oder verdeckt eingebaut. Die Spannungsversorgung (26) kann auch mittels Solarmodulen erfolgen. Im Container (12) ist auch wenigstens ein Auslöser (32) vorhanden, der die Übertragung der von den jeweiligen Sensoren ausgegebenen Daten zu dem Kommunikationsgerät (22) veranlaßt, das die Sensordaten zusammen mit den geographischen Standortdaten aussendet. Als Auslöser können Uhren, z.B. Funkuhren, Bewegungsmelder usw. vorgesehen sein.

Der Bordrechner (20) im jeweiligen Transportmittel ist mit einem Funk-Kommunikationsgerät (34) verbunden, an das eine Antenne (36) angeschlossen ist. Es kann sich hierbei um ein an sich bekanntes Kommunikationsgerät wie das Sende/Empfangsgerät für ein Mobiltelefon (C/D-Netz), um ein Funkmodem (Betriebs-, Bündel-, Daten-Funk incl. Modacom, Mobitex, GfD) oder um eine Satellitenkommunikation handeln.

Das Kommunikationsgerät (34) sendet Daten über die Antenne (36) aus, für deren Empfang eine ortsfeste Antenne (38), die insbesondere für das D-Netz der Post vorgesehen und mit einer Vermittlungszentrale (40) verbunden ist, in der Telefonverbindungen hergestellt werden. Eine zentrale Überwachungsstelle (42) ist über Telefonleitungen (44) mit der Vermittlungszentrale (40) verbunden. In der Übewachungsstelle (42) sind Sende-, Empfangsgeräte jeweils mit einem Modem und an dieses angeschlossene Rechner mit Monitoren, Drucker und anderen Datenverarbeitungsgeräten vorhanden. Außerdem sind akustische und/oder optische Melder zur Abgabe von Warnsignalen vorhanden.

Auch in den fahrbahren Transportmitteln sind Auslöser vorhanden, mit denen das Aussenden eines Funktelegramms, das einen bestimmten Befehl und die geographischen Standortdaten, sowie weitere Daten enthält, gesteuert bzw. eingeleitet wird. Ein derartiger Auslöser ist z.B. eine Uhr, die als Software-Uhr im Bordrechner (20) realisiert sein kann. Es kann auch eine Funkuhr vorgesehen sein, die in bestimmten Zeitabständen empfangen wird und z.B. die Software-Uhr im Bordrechner synchronisiert. In den fahrbaren Transportmitteln, insbesondere wenn sie zur Personenbeförderung bestimmt sind, befinden sich auch andere Auslöser als in den Container (12).

Ein Auslöser ist bei einer bevorzugten Ausführungsform eine Notruftaste (46), die an den Bordrechner (20) angeschlossen ist. Die Notruftaste (46) befindet sich an einer verdeckten Stelle im Fahrzeug wie Last- oder Personenkraftwagen (14) bzw. (10). Bei Betätigung der Notruftaste (46) wird im Bordrechner (20) z.B. mit einem Interrupt ein Programm aufgerufen, mit dem ein Telegramm, das die Rufnummer der Überwachungsstelle einen Befehl zur Auslösung eines bestimmten Alarms in der Überwachungsstelle (42), die geographischen Fahrzeugpositionen sowie fahrzeugspezifische Daten enthält, erzeugt und dem Kommunikationsgerät (34) zugeleitet wird, das ein entsprechendes Funktelegramm aussendet. Dieses Telegramm wird von der Antenne (38) der Vermittlungszentrale (40) zugeleitet, die es über die Telefonleitung (44) an die Überwachungsstelle (42) überträgt, in der es ausgewertet wird. Die Auswertung besteht z.B. in einem optischen und/oder akustischen Alarm unter gleichzeitiger Anzeige der Fahrzeugsposition und der weiteren fahrzeugspezifischen Daten, z.B. des Fahrzeugtyps, des Fahrzeug-Kennzeichens, der Farbe, des Baujahrs usw.. Das Überwachungspersonal in der Überwachungsstelle (42) leitet dann die notwendigen Maßnahmen ein, um das Fahrzeug anzuhalten. So kann ein Überwachungsdienst mit Fahrzeugen zu demjenigen Fahrzeug geleitet werden, von dem der Notruf ausgesandt wurde. Es ist auch möglich, die Polizei zu alarmieren. Die Notruftaste (46) ist für die Betätigung bei Bedrohung oder Car-Napping wichtig. Sie kann aber auch bei anderen Gefahren, insbesondere bei einer schweren Beeinträchtigung der Gesundheit betätigt werden.

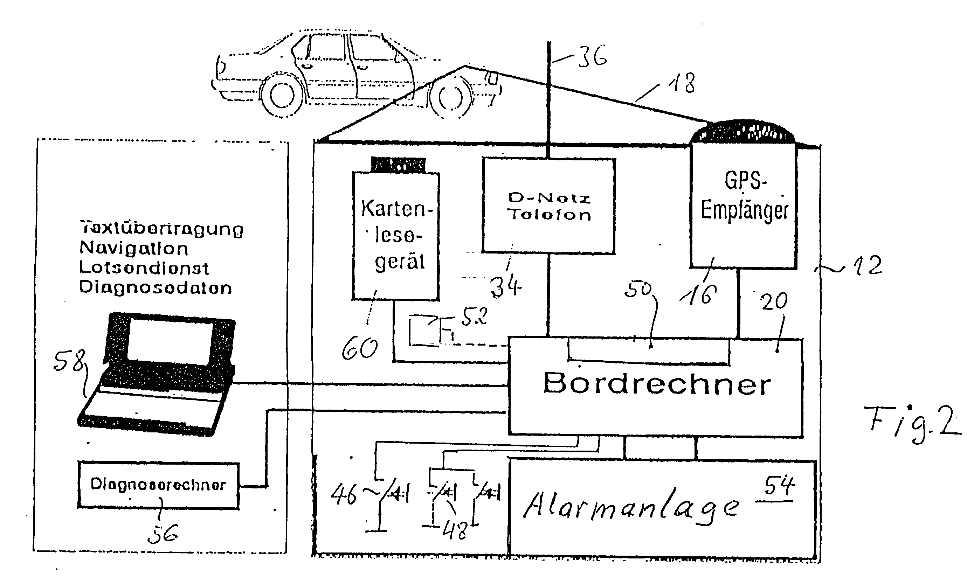

Mit dem Bordcomputer sind noch andere Tasten (48) verbunden, die zur Eingabe von Befehlen dienen. Mittels der Tasten (48), von denen in Fig. 2 nur zwei dargestellt sind, kann in einem Code ein Befehl in den Bordrechner (20) eingegeben werden, der im Bordrechner (20) ein Programm aufruft, mit dem ein Telegramm erzeugt wird, das neben der Rufnummer der zentralen Überwachungsstelle (42) einen Befehl zur Auslösung eines Alarms in der Überwachungsstelle (42), die im Bordrechner gespeicherten fahrzeugspezifischen Daten und die geographischen Positionsdaten des Fahrzeugs enthält. Das Telegramm wird vom Kommunikationsgerät (34) ausgesendet und über die Antenne (38) sowie die Vermittlungszentrale (40) der zentralen Überwachungsstelle (42) zugeführt, in der das Telegramm einen Alarm auslöst. Ein solcher Alarm kann von einem beliebigen Ort aus in der Überwachungsstelle (42) hervorgerufen werden. Das Überwachungspersonal kann an Hand der angezeigten geographischen Fahrzeugposition Maßnahmen zur Sicherung oder Wiederbeschaffung des Fahrzeugs einleiten.

Der Bordrechner (20) hat ein Display (50), mit dem Daten dem Fahrer angezeigt werden. Wahlweise ist auch ein Beschleunigungssensor (52) mit dem Bordrechner (20) verbunden.

Über die Tastatur des Bordrechners (20), z.B. mit einer speziellen, nicht näher dargestellten Taste, wird ein Befehl in den Bordrechner (20) eingegeben, der ein bestimmtes Programm aufruft, mit dem ein Telegramm erzeugt wird, das die die Rufnummer der Überwachungsstelle (42), die geographische Fahrzeugposition, fahrzeugspezifische Daten und einen Befehlsteil enthält, der die zentrale Überwachungsstelle (42) anweist, das geparkte bzw. stillstehende Fahrzeug zu überwachen. Dieses Telegramm wird dem Kommunikationsgerät (34) zugeführt, das ein entsprechendes Funktelegramm aussendet, das von der Antenne (38) empfangen wird. Über die Antenne (38), die Vermittlungszentrale (40) und die Telefonleitung (44) gelangt das Telegramm zur Überwachungsstelle (42), in der es eine bestimmte Funktion auslöst, die in der Überwachung des geparkten Fahrzeugs besteht und als Überwachungsstatus bezeichnet wird. Die Funktion ist durch ein vom Telegramm aufgerufenes Programm in einem Rechner der zentralen Überwachungsstelle realisiert.

Dieses Programm erzeugt zunächst seinerseits ein Telegramm, das die Rufnummer des Fahrzeugs, von dem der Anruf ausgegangen ist, und eine Nachricht enthält, die sich auf die Bestätigung des Empfanges des Telegramms bezieht, mit dem der Überwachungsauftrag der Überwachungsstelle (42) erteilt wurde.

Von der Überwachungsstelle (42) wird dieses Telegramm der Vermittlungszentrale (40) zugeführt, die es an die Antenne (38) weiterleitet. Das von der Antenne (38) ausgesandte Funktelegramm wird von der Antenne (36) empfangen und gelangt über das Kommunikationsgerät (34) in den Bordcomputer (20), der es verarbeitet und auf dem Display (50) die Information "Kfz gesichert" anzeigt. Dem Fahrer wird hierdurch mitgeteilt, daß die Überwachung durch die Zentrale in Kraft ist.

Kriterium für eine unbefugte Manipulation des Fahrzeugs ist insbesondere die Ortsveränderung des Fahrzeugs. Wenn das Fahrzeug bei eingespeichertem Überwachungszustand bewegt wird, wird z.B. der Beschleunigungssensor (52) betätigt. Die Betätigung wird vom Bordrechner (20) erfaßt und löst, z.B. durch einen Interrupt, die Erzeugung eines Telegramms aus, das neben der Rufnummer der Überwachungsstelle den fahrzeugspezifischen Daten und dem geographischen Standort eine Meldung über die Bewegung des Fahrzeugs enthält. Es ist auch möglich, die Standortdaten des geparkten Fahrzeugs im Bordrechner (20) zu speichern und mit den jeweils vom Satellitennavigations-Empfänger ausgegebenen Standortdaten zu vergleichen. Wird eine Änderung der geographischen Position des Fahrzeugs im Überwachungsstatus festgestellt, dann wird das vorstehend beschriebene Telegramm erzeugt, das vom Kommunikationsgerät (34) ausgesendet und von der Antenne (38) empfangen wird. Über die Antenne (38) gelangt das Telegramm zur Vermittlungszentrale (40), die es über die Telefonleitung (44) der Überwachungsstelle (42) zuleitet, in der es ausgewertet wird. Die Auswertung besteht in der Erzeugung eines Alarms, bei dem auch die mit dem Telegramm übertragenen Daten auf einem Monitor angezeigt werden. Das Überwachungspersonal in der Überwachungsstelle (42) leitet dann Maßnahmen zur Verhinderung der Entwendung oder Wiedergewinnung des Fahrzeugs ein, indem z.B. der dem Fahrzeugstandort nächstgelegene Sicherheitsdienst alarmiert und zum Ort des Fahrzeugs beordert wird.

Das Fahrzeug kann auch mit einer Alarmanlage (54) ausgestattet sein, die ebenfalls mit dem Bordrechner (20) verbunden wird. Die Verbindung besteht darin, daß einerseits, z.B. über eine eigene Leitung dem Bordrechner (20) der Status der Alarmanlage, nämlich scharf oder unscharf, und andererseits das Auslösen der Alarmanlage, z.B. über eine andere Leitung, mitgeteilt wird. Das Scharfschalten der Alarmanlage (54) wird vom Bordrechner (20) erkannt und löst die Erzeugung eines Telegramms aus, das die geographische Fahrzeugposition, die Rufnummer der Überwachungsstelle (42) bzw. Überwachungszentrale, fahrzeugspezifische Daten und eine Nachricht enthält, mit der mitgeteilt wird, daß das Kraftfahrzeug mit geschärfter Alarmanlage abgestellt ist. Das Telegramm wird vom Kommunikationsgerät (34) ausgesendet und gelangt über den oben eingehend beschriebenen Weg zur Überwachungsstelle (42), in der es ausgewertet wird. Die Auswertung besteht darin, daß ein sogenannter Beobachtungsstatus oder -zustand in der Datenverarbeitungsanlage der Überwachungsstelle (42) gespeichert wird.

Wenn die Alarmanlage (54) aufgrund von Manipulationen am Fahrzeug anspricht, stellt dies der Bordcomputer (20) fest und erzeugt ein Telegramm, das neben der Rufnummer der Überwachungsstelle (42), den geographischen Positionen des Fahrzeugs und fahrzeugspezifischen Daten eine Nachricht über die Betätigung der Alarmanlage enthält. Dieses Telegramm kann über einen gesonderten Alarmkanal ausgesendet werden und wird von der Überwachungsstelle (42) empfangen, in der es eine entsprechende Alarmmeldung auslöst, die vom Überwachungspersonal bearbeitet wird.

Der Bordrechner (20) hat eine Schnittstelle zum Anschluß eines Diagnoserechners (56), mit dem bestimmte Kraftfahrzeugfunktionen überwacht werden können. Weiterhin ist eine Schnittstelle für den Anschluß eines Laptops (58) oder Personal-Computers vorgesehen.

Mit dem Laptop (58) oder PC werden in den Bordcomputer (20) unter anderem Informationen eingegeben, die sich auf geographische Positionen einer Soll-Fahrtroute, auf eine Soll-Zeitspanne für die Fahrtroute und z.B. auf das Datum, an dem die Fahr durchgeführt werden soll eingegeben. Ferner werden Toleranzen für diese Daten eingegeben.

Nach dem Antritt der Fahrt vergleicht der Bordcomputer (20) das Datum und die Uhrzeit mit den entsprechenden Vorgabewerten. Außerdem werden die vom Satellitennavigationsempfänger erzeugten Fahrzeugpositionen mit den entsprechenden SollPositionen längs der Fahrtroute verglichen. Wenn Abweichungen des Datums, der Zeitspanne oder der Fahrzeugpositionen von den jeweiligen Soll-Vorgabewerten festgestellt werden, wird vom Bordcomputer (20) ein Telegramm erzeugt, das die spezifischen Fahrzeugdaten, die Rufnummer der Überwachungsstelle (42), den geographischen Fahrzeugstandort und eine Alarmmeldung enthält. Dieses Telegramm wird vom Kommunikationsgerät (34) ausgesendet und gelangt in die Überwachungsstelle (42), in der ein entsprechender Alarm ausgelöst wird. Vom Überwachungspersonal können daraufhin Maßnahmen zum Einhalten der vorgegebenen Fahrtroute z.B. durch Anweisungen getroffen werden, die über Funk dem Fahrer übermittelt werden.

Daten der oben beschriebenen Art können auch durch ein Kartenlesegerät (60) in den Bordcomputer (20) eingegeben werden. In den Bordcomputer kann auch eine Wegliste zur Zielführung mittels Anzeige auf dem Display (50) eingegeben werden. Über Funk kann auch ein Lotsendienst erbracht werden, in dem aktuelle Routenempfehlungen von der Überwachungsstelle ausgesendet werden. Fahrzeugflotten können durch Ortung per D-Netz, Bündel-Datenfunk etc. und Darstellung in digitalen Straßenkarten gesteuert werden.

Darüberhinaus können bei Abwesenheit des Fahrers Daten und Textdateien in eine Mail-Box eingegeben werden. Die aktuelle Fahrzeugposition kann auf dem Display dargestellt werden.

Es ist auch möglich, Diagnosedaten aus dem Bordcomputer (20), der z.B. Sensoren im Kraftfahrzeug überwacht, zur Überwachungsstelle (42) zu übertragen, die einen Servicedienst alarmiert, wenn eine Pause festgestellt wird.

Die zentrale Überwachungsstelle (42) kann gegebenenfalls auch mobil ausgebildet sein.

In der Überwachungsstelle (42) können die Abstellorte der Container (12) festgestellt sowie deren Zustände überwacht und, wenn die Container in gleicher Weise wie die Fahrzeuge mit Alarmanlagen versehen sind, Manipulationen an den Containern (12) erkannt werden.

Zum Schutz vor Manipulationen und/oder unberechtigtem Abfragen von Positionsdaten durch Dritte können alle Informationen verschlüsselt übertragen werden.

Unabhängig davon sei darauf hingewiesen, daß die erfindungsgemäße Lehre auf alle beweglichen und zu überwachenden Einrichtungen also nicht nur Kraftfahrzeuge, Container, Schiffe etc. anwendbar ist.

## Patentansprüche

1. Verfahren zur Überwachung eines abzustellenden Kraftfahrzeugs (10,14) mittels Informationsübertragung über Funkkommunikation umfassend die Verfahrensschritte
- Anhalten des Kraftfahrzeuges,
- Betätigen eines Meldeorgans (32) in dem Kraftfahrzeug zur Übertragung eines Informationen enthaltenden Telegramms mittels Funkkommunikation (34) an eine externe Überwachungsstelle (42), wobei die Informationen zumindest mittels eines Satellitennavigations-Empfängers festgestellte Kraftfahrzeugmittelposition enthalten,
- wobei bei erfolgreichem Empfang des Telegramms in der externen Überwachungsstelle ein Überwachungsstatus in der externen Überwachungsstelle für das angehaltene Kraftfahrzeug unter Berücksichtigung der dem Telegramm zu entnehmenden Informationen eingestellt wird, sodann ein den eingerichteten Überwachungsstatus bestätigendes Signal an das Kraftfahrzeug rückgesendet und bei erfolgtem Empfang des Signals in dem Kraftfahrzeug dieses angezeigt wird, oder
- wobei aufgrund unterbliebenen Empfangs des Telegramms in der externen Überwachungsstelle und fehlender Rücksendung des Signals und/oder Nichtanzeigen des den Überwachungsstatus bestätigenden Signals das Kraftfahrzeug in erforderlichem Umfang in eine von der vorliegenden Position abweichende Position bewegt und dort angehalten wird, in der von der externen Überwachungsstelle ein den Überwachungsstatus betätigendes Signal in dem Kraftfahrzeug angezeigt wird,
- Parken des Kraftfahrzeuges,
- wobei bei ungewollter Veränderung im oder am Kraftfahrzeug oder bei Manipulation der geografischen Kraftfahrzeugposition während des Überwachungsstatus ein Alarmsignal erzeugt und abgesandt wird und in der Überwachungsstelle nach Empfang des Alarmsignals ein Alarm ausgelöst und unter Zugrundelegung der in der Überwachungsstelle abgespeicherten Informationen Maßnahmen eingeleitet werden.

2. Verfahren nach Anspruch 1,
**dadurch gekennzeichnet,**
**dass** die mittels Funkkommunikation übertragenen Informationen kraftfahrzeugspezifische Daten enthalten.

3. Verfahren nach Anspruch 1,
**dadurch gekennzeichnet,**
**daß** durch einen Befehl mit einem speziellen Code der Überwachungsstelle die Beendigung des Überwachungsstatus mitgeteilt wird.

4. System zur Durchführung des Verfahrens nach Anspruch 1,
wobei in dem Kraftfahrzeug ein Satellitennavigations-Empfänger (16) mit aktiver oder passiver Antenne (18) angeordnet und mit einem Bordrechner (20) verbunden ist, an den ein Sende/Empfangsteil eines Kommumkationsgerätes (34) für drahtlose Nachrichtenübertragung mit einer Antenne zum Kommunizieren (36) mit einer externen Überwachungsstelle (42) und Auslösen eines Alarms in dieser angeschlossen ist,
wobei
- in dem Kraftfahrzeug ein Meldeorgan (32) zum Aussenden eines Überwachungsbefehls zur Einstellung eines Überwachungsstatus vorgesehen ist,
- in der externen Überwachungsstelle ein Speicher vorgesehen ist, in dem die festgestellte Position des Transportmittels und/oder dessen spezifische Daten nach Aussenden des Überwachungsbefehls für das Transportmittel gespeichert wird,
- an dem Bordrechner ein Display zum Anzeigen einer Bestätigung des Empfangs des Überwachungsbefehls durch die Überwachungsstelle angeschlossen ist.

5. System nach Anspruch 4,
**dadurch gekennzeichnet,**
**daß** an den Bordrechner (20) eine Notruftaste (46) angeschlossen ist.

6. System nach Anspruch 4 oder 5,
**dadurch gekennzeichnet,**
**daß** an den Bordrechner (20) eine Eingabetastatur (48) angeschlossen ist.

7. System nach einem oder mehreren der Ansprüche 4 bis 6,
**dadurch gekennzeichnet,**
**daß** an den Bordrechner (20) eine Alarmanlage (54) im Kraftfahrzeug angeschlossen ist.

8. System nach einem oder mehreren der Ansprüche 4 bis 7,
**dadurch gekennzeichnet,**
**daß** das Kommunikationsgerät ein Sende/Empfangsteil eines mobilen Telefonnetzes wie D-Netzes ist.

## Claims

1. Method for monitoring a motor vehicle (10, 14) to be parked by means of information transmission via radio communication comprising the steps:
- stopping of the motor vehicle
- activating a message organ (32) in the motor vehicle for transmission of an information string via radio communication (34) to an external monitoring stand (42), whereby the information contains the position of the motor vehicle determined by means of at least one satellite navigation receiver,
- wherein at successful reception of the information string at the external monitoring stand a monitoring status is set for the stopped motor vehicle considering the information to be taken from the information string, then transmitting back a signal to the motor vehicle acknowledging the set monitoring status and displaying the signal in the motor vehicle after occured reception or
- whereby in the case that the information string has not been received in the external monitoring stand and of non-retransmission of the signal and/or non-displaying the signal acknowledging the monitoring status the motor vehicle is moved to a certain extent to a different position and stopped there, when in said different position a signal of the external monitoring stand acknowledging the monitoring status is displayed in the motor vehicle,
- parking of the motor vehicle,
- whereby in the case of unintentional change in or at the motor vehicle or in the case of manipulation of the geographical position of the motor vehicle during the monitoring status an alarm signal is generated and sent off and at the monitoring stand after reception of the alarm signal an alarm is activated and measures are initiated based upon the information stored in the monitoring stand

2. Method according to claim 1, **characterized in, that** the information transmitted via radio communication contains specific vehicle data

3. Method according to claim 1, **characterized in, that** a command signal with a special code communicates the termination of the monitoring status to the monitoring stand.

4. System to carry out the method according to claim 1, wherein in the motor vehicle a satellite navigation receiver (16) with an active or a passive antenna (18) is arranged and connected to an on-board computer (20), to which is wired a transmitter/receiver component of a device (34) for wireless communication with an antenna for communication (36) with an external monitoring stand and initiating an alarm signal in the monitoring stand, wherein
- in the motor vehicle a message organ (32) for transmission a monitoring command signal for setting a monitoring status is provided,
- in the external monitoring stand a memory device is provided, in which the determined position of the means of transportation and/or its specific data are stored after transmission of the monitoring command signal for the means of transportation,
- a display for displaying an acknowledgement of the reception of the monitoring command signal by the monitoring stand is connected to the on-board computer.

5. System according to claim 4, **characterized in, that** an emergency push button (46) is connected to the on-board computer (20).

6. System according to claim 4 or 5, **characterized in, that** a keyboard (48) is connected to the on-board computer (20).

7. System according to one or several of the claims 4 to 6, **characterized in, that** an alarm equipment (54) in the motor vehicle is connected to the on-board computer (20).

8. System according to one or several of the claims 4 to 7, **characterized in, that** the device for wireless communication is a transmitter/receiver component of a mobile phone network like the D-network.

## Revendications

1. Procédé pour contrôler un véhicule automobile (10,14) devant être arrêté, au moyen d'une transmission d'informations par l'intermédiaire d'une communication radio, comprenant les étapes opératoires consistant à :
- arrêter le véhicule automobile,
- actionner un organe de signalisation (32) dans le véhicule automobile pour transmettre un télégramme contenant des informations, à l'aide d'une communication radio (34) à un point de contrôle externe (42), les informations contenant au moins une position moyenne du véhicule automobile, fixée au moyen d'un récepteur de navigation par satellite,
- selon lequel lors d'une réception avec succès du télégramme dans le poste de contrôle externe un état de contrôle dans le poste du contrôle externe est réglé pour le véhicule automobile arrêté en tenant compte des informations devant être prélevées du télégramme, et ensuite un signal confirmant l'état de contrôle établi est renvoyé au véhicule automobile et, lorsque la réception du signal est effectuée dans le véhicule automobile, ce signal est affiché, ou
- selon lequel sur la base de l'absence de réception du télégramme dans le poste de contrôle externe et en l'absence d'un renvoi du signal et/ou du non-affichage d'un signal confirmant l'état de contrôle, le véhicule automobile se déplace dans une mesure nécessaire pour venir dans une position qui diffère de la présente position et est arrêté dans cette position, dans laquelle un signal confirmant l'état de contrôle est affiché par le poste de contrôle externe dans le véhicule automobile,
- parquer le véhicule automobile,
- selon lequel dans le cas d'une modification involontaire dans ou sur le véhicule automobile ou dans le cas d'une manipulation de la position géographique du véhicule automobile pendant l'état de contrôle un signal d'alarme est produit et émis et, dans le poste de contrôle, après la réception du signal d'alarme, une alarme est déclenchée, et sur la base des informations mémorisées dans le poste de contrôle des mesures sont prises.

2. Procédé selon la revendication 1, **caractérisé en ce que** les informations transmises au moyen d'une communication radio contiennent des données spécifiques au véhicule automobile.

3. Procédé selon la revendication 1, **caractérisé par le fait que** la fin de l'état de contrôle est communiquée par une instruction avec un code particulier au poste de contrôle.

4. Système pour la mise en oeuvre du procédé selon la revendication 1, selon lequel un récepteur de navigation par satellite (16) comportant une antenne active ou passive (18) est disposé dans le véhicule automobile et est relié à un réseau de bord (20), auquel est raccordée une partie d'émission/réception d'un appareil de communication (34) pour la transmission d'informations sans fil avec une antenne pour communiquer (36) avec un poste de contrôle externe (42) et déclencher une alarme dans ce dernier,
dans lequel
- dans le véhicule automobile il est prévu un organe de signalisation (32) servant à émettre une instruction de contrôle pour le réglage d'un état de contrôle,
- dans le poste de contrôle externe il est prévu une mémoire, dans laquelle la position fixée du moyen de transport et/ou ses données spécifiques sont mémorisées après l'émission de l'instruction de contrôle pour le moyen de transport,
- un dispositif d'affichage servant à afficher la configuration de réception de l'instruction de contrôle par le poste de contrôle est raccordé au réseau de bord.

5. Système selon la revendication 4, **caractérisé en ce qu'**une touche d'appel d'urgence (46) est raccordée au calculateur de bord (20).

6. Système selon la revendication 4 ou 5, **caractérisé en ce qu'**un clavier d'entrée (48) est raccordé au calculateur de bord (20).

7. Système selon une ou plusieurs des revendications 4 à 6, **caractérisé en ce qu'**une installation d'alarme (54) est raccordée au calculateur de bord (20) dans le véhicule automobile.

8. Système selon une ou plusieurs des revendications 4 à 7, **caractérisé en ce que** l'appareil de communication est une partie d'émission/réception d'un réseau téléphonique mobile tel que le réseau D.
